# EUROPÄISCHE PATENTANMELDUNG

(11) **EP 1 600 200 A1**
(43) Veröffentlichungstag der Anmeldung: **30.11.2005**
(21) Anmeldenummer: 05103694.5
(22) Anmeldetag: 03.05.2005
(51) Int. Cl.: B01D 39/20

(54) **Vorrichtung zur Reinigung von Gasgemischen und Verfahren zu deren Herstellung**

(30) Priorität: 11.05.2004 DE 102004023066; 14.04.2005 DE 102005017265
(71) Anmelder: ROBERT BOSCH GMBH, 70442 Stuttgart (DE)
(72) Erfinder: Reinsch, Bernd, 71642, Ludwigsburg (DE); Alkemade, Ulrich, 71229, Leonberg (DE); Elbe, Dieter, 74343, Sachsenheim (DE); Ullmann, Ilona, 70825, Korntal-Muenchingen (DE); Jockel, Jörg, 70839, Gerlingen (DE); Komori, Teruo, 70378, Stuttgart (DE); Thuener, Lars, 70499, Stuttgart (DE); Kruse, Matthias, 70499, Stuttgart (DE)

(57) **Zusammenfassung**

Es wird eine Vorrichtung zur Reinigung von Gasgemischen, die Partikel enthalten, insbesondere von rußhaltigen Abgasen von Verbrennungsmotoren, sowie ein Verfahren zu deren Herstellung beschrieben, wobei die Vorrichtung als Filter (10) ausgeführt ist, der eine dem zu reinigenden Gasgemisch ausgesetzte, poröse Oberfläche (18) aus einem Filterbasismaterial aufweist. Auf die dem zu reinigenden Gasgemisch ausgesetzte Oberfläche (18) ist eine Schicht (22) keramischer Fasern aufgebracht.

## Beschreibung

Die Erfindung betrifft eine Vorrichtung zur Reinigung von Gasgemischen, die Partikel enthalten, insbesondere von rußhaltigen Abgasen von Verbrennungsmotoren, sowie ein Verfahren zu deren Herstellung und deren Verwendung nach dem Oberbegriff der unabhängigen Ansprüche.

### Stand der Technik

Die Reinigung von Abgasen, die insbesondere kohlenstoffhaltige Partikel enthalten, gewinnt zunehmend an Bedeutung. Zur Reinigung derartiger Gasgemische werden üblicherweise keramische Filtersysteme eingesetzt. Die Herausforderung zur Optimierung derartiger Systeme liegt primär nicht in der Filtration selber - viele Partikelfilter ermöglichen eine Abscheidung von mehr als 99 Prozent - sondern in dem dauerhaften und effizienten Einsatz des Filters ohne Verstopfung und ohne eine damit verbundene übermäßige Erhöhung des Durchflusswiderstandes über das gesamte Filtersystem.

Neuere Filtersysteme weisen an Stelle eines porösen keramischen Grundkörpers ein Filterelement auf Sintermetallbasis auf. Diese haben den Vorzug, dass sie ein wesentlich homogeneres Filtrationsverhalten zeigen als herkömmliche Filtersysteme und weitgehend wartungsfrei eingesetzt werden können. Dennoch kann es vor allem im Langzeitbetrieb zur Verstopfung der Poren kommen.

Der als Ruß abgelagerte Kohlenstoff muss daher in regelmäßigen Intervallen vorzugsweise oxidativ entfernt werden. Die direkte Oxidation von Ruß durch Sauerstoff fmdet in einem relevanten Umfang erst bei Temperaturen oberhalb von 600 °C statt. Die Temperatur von Abgasen eines Dieselmotors beträgt jedoch in der Regel nur 150 bis 350 °C. Die Abgastemperatur muss demzufolge durch motorische oder andersartige Maßnahmen zur Regenerierung erhöht werden. Dies hat insbesondere bei motorischen Maßnahmen einen erhöhten Kraftstoffverbrauch zur Folge und kann die Lebensdauer des Verbrennungsmotors beeinträchtigen. Darüber hinaus werden auch die entsprechenden Filtersysteme durch die hohen Temperaturen geschädigt. Es besteht daher die Notwendigkeit, Filtersysteme so auszulegen, dass die Zahl der Regenerationsvorgänge möglichst gering gehalten werden kann.

Aus der US 6,669,751 ist eine keramische Filteranordnung zur Reinigung von Verbrennungsabgasen bekannt, bei der die Reinigungswirkung herkömmlicher keramischer Filter dadurch verbessert wird, dass eine Vielzahl einzelner Filter durch faserhaltige Dichtschichten zu einem Filterverbund kombiniert werden. Auf diese Weise wird zwar der durch das Filterelement bedingte Druckverlust minimiert, die Zahl der nötigen Regenerationsvorgänge erscheint jedoch nach wie vor recht hoch.

Aufgabe der vorliegenden Erfindung ist es, eine Vorrichtung zur Reinigung von partikelhaltigen Gasgemischen bereitzustellen, die eine möglichst hohe filteraktive Oberfläche aufweist.

### Vorteile der Erfindung

Die der Erfindung zugrundeliegende Aufgabe wird in vorteilhafter Weise durch die erfindungsgemäße Vorrichtung mit den kennzeichnenden Merkmalen des Anspruchs 1 gelöst. Dazu weist die Vorrichtung, die als Filter ausgeführt ist, eine dem zu reinigenden Gasgemisch ausgesetzte, poröse Oberfläche aus einem Filterbasismaterial auf, wobei die dem zu reinigenden Gasgemisch ausgesetzte Oberfläche mit einer Schicht keramischer Fasern versehen ist.

Die aufgebrachte Schicht aus keramischen Fasern erhöht die effektive filteraktive Oberfläche des Filters und führt somit zu einer weitgehend homogenen Partikelabscheidung auf der dem zu reinigenden Gasgemisch ausgesetzten Filteroberfläche.

Durch die in den Unteransprüchen aufgeführten Maßnahmen sind vorteilhafte Weiterbildungen der in Anspruch 1 angegebenen Vorrichtung möglich.

So sind die keramischen Fasern vorteilhafterweise durch einen Binder mit dem Filterbasismaterial verklebt. Auf diese Weise ist gewährleistet, dass die aufgebrachte Schicht keramischer Fasern langzeitstabil mit der Filteroberfläche verbunden wird. Die Filteroberfläche ist dabei vorzugsweise auf der Basis eines Sintermetalls ausgeführt.

In einer weiteren vorteilhaften Ausführungsform sind die keramischen Fasern aus Aluminiumoxid oder einem Alumosilikat, ggf. unter Zusatz von Zirkondioxid ausgeführt. Dies ermöglicht den Dauereinsatz des Filters bei Temperaturen bis zu 1400 °C bei einer sehr guten Temperaturwechselbeständigkeit. Die keramischen Fasern sind somit auch gegenüber den bei Regenerationsvorgängen auftretenden lokal hohen Temperaturen beständig. Weiterhin weisen die keramischen Fasern eine geringe Dichte und eine geringe Wärmeleitfähigkeit auf und zeigen ein flexibles und elastisches Verhalten. Ihre Herstellung und ihr Aufbringen auf die Filteroberfläche kann kostengünstig erfolgen.

Eine gute Filterwirkung der die keramischen Fasern enthaltenden Schicht ist insbesondere dann gegeben, wenn die keramischen Fasern eine mittlere Länge von 150 bis 400 µm und einen mittleren Durchmesser von 3 bis 10 µm aufweisen.

Besonders vorteilhaft ist, wenn der Binder ein anorganisches Material auf der Basis eines Aluminiumoxids, Siliciumoxids oder Alumosilikates ist, da dies eine besonders gute Anbindung der keramischen Fasern an die poröse Filteroberfläche ermöglicht.

Eine weitere vorteilhafte Ausführungsform besteht darin, dass die Schicht keramischer Fasern zusätzlich sphärische Partikel oder zweite keramische Fasern mit einem relativ kleinen Aspektverhältnis von 1:5 bis 1:1 aufweisen. Diese dienen innerhalb des Verbunds der keramischen Fasern der Schicht als Abstandhalter zwischen den einzelnen Fasern und erleichtern somit die Einstellung einer gewünschten Porosität bzw. Durchlässigkeit der Schicht. Außerdem erhöht sich die Filterkapazität der die keramischen Fasern enthaltenden Schicht.

In einer besonders vorteilhaften Ausführungsform weisen die sphärischen Partikel eine katalytisch aktive Substanz auf, die beispielsweise als Oxidationskatalysator, als Katalysator zur Senkung der Rußabbrandtemperatur oder als Speichermaterial für Stickoxide oder Sauerstoff dient. Dies verbessert die Regenerierfähigkeit der Vorrichtung wesentlich.

### Zeichnung

Ein Ausführungsbeispiel der erfmdungsgemäßen Vorrichtung ist in der Zeichnung dargestellt und in der nachfolgenden Beschreibung näher erläutert. Figur 1 zeigt schematisch eine Vorrichtung in Form eines mit einer Oberflächenbeschichtung versehenen Filters gemäß einem ersten Ausführungsbeispiel der vorliegenden Erfindung, Figur 2 schematisch einen Verarbeitungsschritt eines Verfahrens zur Herstellung der Vorrichtung, Figur 3 zeigt eine Mikroskopaufnahme einer teilweise mit einer Oberflächenbeschichtung versehenen Filteroberfläche , Figur 4 zeigt eine Aufnahme mit einem Rasterelektronenmikroskop der auf einem Filtermaterial aufgebrachten Oberflächenbeschichtung, Figur 5 zeigt eine Auftragung des Druckverlustes über der Partikelbeladung eines Partikelfilters gem. Stand der Technik und eines Partikelfilters mit einer Beschichtung aus keramischen Fasern und Figur 6 zeigt schematisch den Aufbau einer mit einer Schicht keramischer Fasern beschichteten Vorrichtung gemäß eines zweiten Ausführungsbeispiels, wobei die Schicht keramischer Fasern sphärische Partikel enthält.

### Ausführungsbeispiele

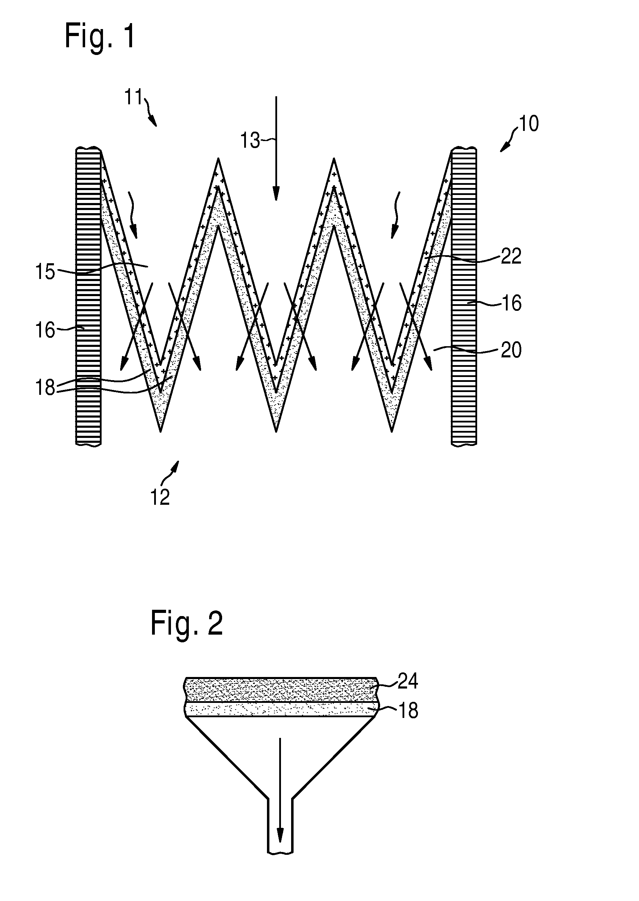

Der prinzipielle Aufbau einer erfindungsgemäßen Vorrichtung wird im folgenden beschrieben. Die Vorrichtung zur Reinigung von Gasgemischen ist vorzugsweise als Filter ausgeführt, wie er schematisch in Figur 1 dargestellt ist. Der Filter ist in ein System integriert, in dem ein mit vorzugsweise brennbaren Partikeln beaufschlagtes Gasgemisch geführt wird. Dies kann bspw. die Abgasleitung eines Dieselmotors sein. Alternativ besteht die Möglichkeit, den Filter in einem Bypass des abgasführenden Systems anzuordnen.

Der in Figur 1 abgebildete Filter 10 ist als Edelstahl- oder Sintermetallfilter ausgeführt und weist eine dem zu reinigenden Gasgemisch zugewandte erste Seite 11 sowie eine dem gereinigten Gasgemisch zugewandte zweite Seite 12 auf. Das mit Partikeln, insbesondere mit Ruß beladene Gasgemisch 13 wird dem Filter 10 auf dessen erster Seite 11 zugeführt. Der Filter 10 umfasst ein Gehäuse 16, in das die eigentliche Filterstruktur integriert ist. Die Filterstruktur umfasst Taschen 15, die an ihrem der ersten Seite 11 zugewandten Ende für den Zutritt des mit Partikeln beladenen Gasgemischs geöffnet sind und an ihrem der zweite Seite 12 zugewandten Ende verschlossen sind. Die Taschen 15 sind an ihren Längsseiten vorzugsweise durch Wandungen 18 begrenzt, die porös ausgeführt sind, sodass sie den Durchtritt des Gasgemischs unter Zurückhaltung der im Gasgemisch enthaltenen Partikel gestatten.

Das die Wandungen 18 durchdringende Gasgemisch gelangt in zweite Taschen 20, die an ihrem der ersten Seite 11 zugewandten Ende verschlossen sind und an ihrem der zweite Seite 12 zugewandten Ende geöffnet sind, sodass das von Partikeln befreite Gasgemisch entweichen kann. Das Gehäuse 16 sowie die Wandungen 18 sind aus einem metallischen Material wie beispielsweise einem Sintermetall oder Edelstahl ausgeführt. Weiterhin ist es möglich, das Gehäuse 16 und die Wandungen 18 aus verschiedenen Materialien auszuführen.

Zur Vergrößerung der filteraktiven Oberfläche der Wandungen 18 sind diese zumindest teilweise, vorzugsweise vollflächig mit einer Oberflächenbeschichtung 22 aus keramischen Fasern versehen. Die keramischen Fasern bestehen beispielsweise aus einem Aluminiumoxid, aus einem Aluminiumsilikat ggf. unter Zusatz von Zirkondioxid, aus Siliciumdioxid, Zirkondioxid oder aus Oxiden bzw. Mischoxiden von Übergangsmetallen wie Cer, Lanthan, Molybdän oder Eisen. Die Fasern besitzen einen mittleren Durchmesser von 3 bis 10 µm, insbesondere von 5 µm und eine mittlere Länge von 150 bis 400µm, vorzugsweise 250 µm auf. Derartige Fasern sind beispielsweise bei der Fa Saffil Ltd, Cheshire, WA8 0RY, UK erhältlich.

Die Aufbringung der Fasern auf dem Filterbasismaterial der Wandungen 18 unter Bildung der Oberflächenbeschichtung 22 erfolgt in einer Weise, dass das Porengefüge der porösen Wandungen 18 nicht verklebt wird und der entstehende Faserverbund auf den Wandungen 18 homogenen verteilt ist. Weiterhin werden die einzelnen Fasern der Oberflächenbeschichtung 22 so miteinander verklebt, dass sich auch bei großen Strömungsgeschwindigkeiten des zu reinigenden Gasgemischs 13 keine Fasern aus dem Faserverbund lösen können. Als klebende Komponente eignen sich Aluminium- oder Alumosilikate, welche zunächst als flüssige Sole oder kolloidale Lösungen vorliegen. Diese zunächst weitgehend löslichen bzw. dispergierten Verbindungen bilden durch einen Kondensationsschritt unter Wasserabspaltung entsprechende Gele. Ein Vorteil dieses Sol-Gel-Prozesses besteht darin, dass auf einfache Weise keramische Überzüge erzeugt werden können.

Dazu wird zunächst eine Lösung geeigneter hydrolysierbarer Alkoholate mehrwertiger Metallionen, wie beispielsweise Titan, Silizium oder Aluminium, in Wasser bzw. einem geeigneten Alkohol hergestellt. Dann werden die keramischen Fasern in der Lösung suspendiert und diese auf die zu beschichtende Oberfläche der Wandungen 18 aufgetragen. Je nach Wassergehalt wird ein Dispergiermittel, beispielsweise in Form eines Tensids, zur Herabsetzung der Oberflächenspannung hinzugegeben. Zur Homogenisierung der Suspension wird diese anschließend vorzugsweise mehrere Minuten in ein Ultraschallbad getaucht. In Gegenwart von Feuchtigkeit bildet sich bereits während des Verdunstens des Lösungsmittels bei tiefen Temperaturen ein Metallhydroxid-Netzwerk aus. Dieses Netzwerk ist wegen seiner zahlreichen Metallhydroxid-Gruppen hydrophil und antistatisch. Wird das Gel nachfolgend einer geeigneten Wärmebehandlung ausgesetzt, so folgt eine Wasserabspaltung unter Bildung von Metalloxid-Gruppen, wobei eine harte und kratzfeste keramische Substanz entsteht.

In Figur 2 ist ein nun folgender Verarbeitungsschritt zur Herstellung der Oberflächen beschichtung 22 dargestellt, bei dem der überschüssige Teil der aufgebrachten Suspension 24 mittels einer geeigneten Absaugvorrichtung bei einem Unterdruck durch die Poren der Wandungen 18 abgezogen wird. Dann erfolgt eine Wärmebehandlung der mit der Suspension behandelten Wandungen 18 beispielsweise bei einer Temperatur von 110 °C für ungefähr 60 Minuten zur Initierung des Sol-Gel-Prozesses.

Geeignete Suspensionen zur Erzeugung einer Oberflächenbeschichtung 22 sind beispielsweise auf der Basis eines Siliciumoxidsols (beispielweise Levasil 300/30, BASF AG, DE) oder auf der Basis eines Aluminiumoxidsols (beispielsweise Resbond 795 der Fa. Polytec, DE oder Pural 200/D30 der Fa. Condea Chemie, DE) ausgeführt und enthalten 0.1 bis 10 Gew.% Fasern aus Aluminiumoxid, insbesondere 0.2 bis 0.9 Gew.%:

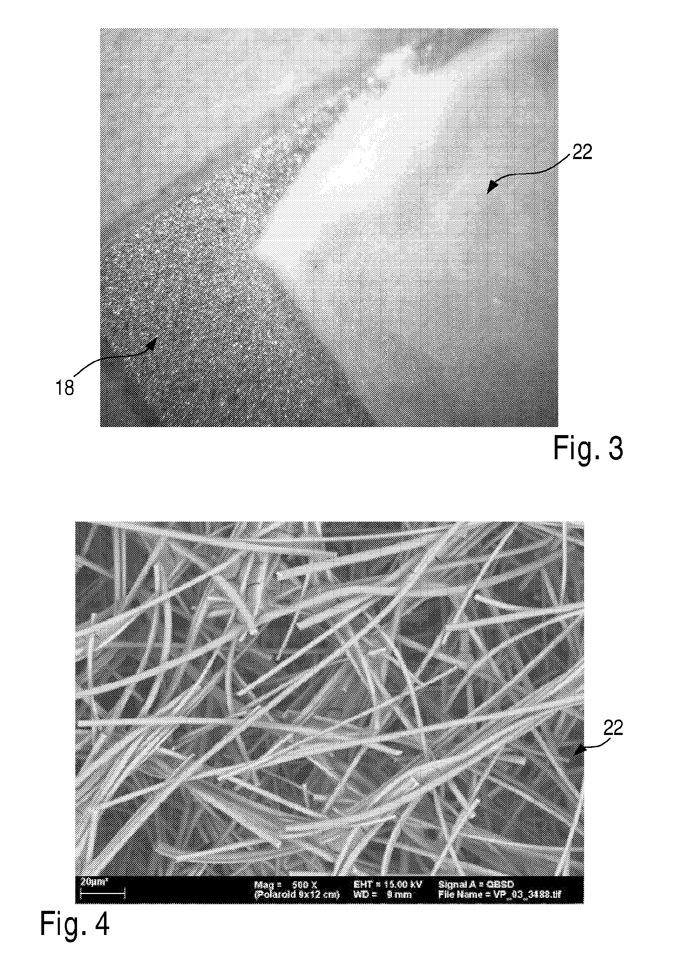

In Figur 3 ist eine Mikroskopaufnahme in 40facher Vergrößerung einer Wandung 18 dargestellt, die teilweise mit einer Oberflächenbeschichtung 22 versehen ist. Dabei ist erkennbar, dass die Oberflächenbeschichtung 22 eine homogene Schicht auf der Wandung 18 ausbildet. Weiterhin ist in Figur 4 eine Aufnahme mit einem Rasterelektronenmikroskop der Oberflächenbeschichtung 22 abgebildet, auf deren die miteinander verklebten keramischen Fasern der Oberflächenbeschichtung 22 zu erkennen sind.

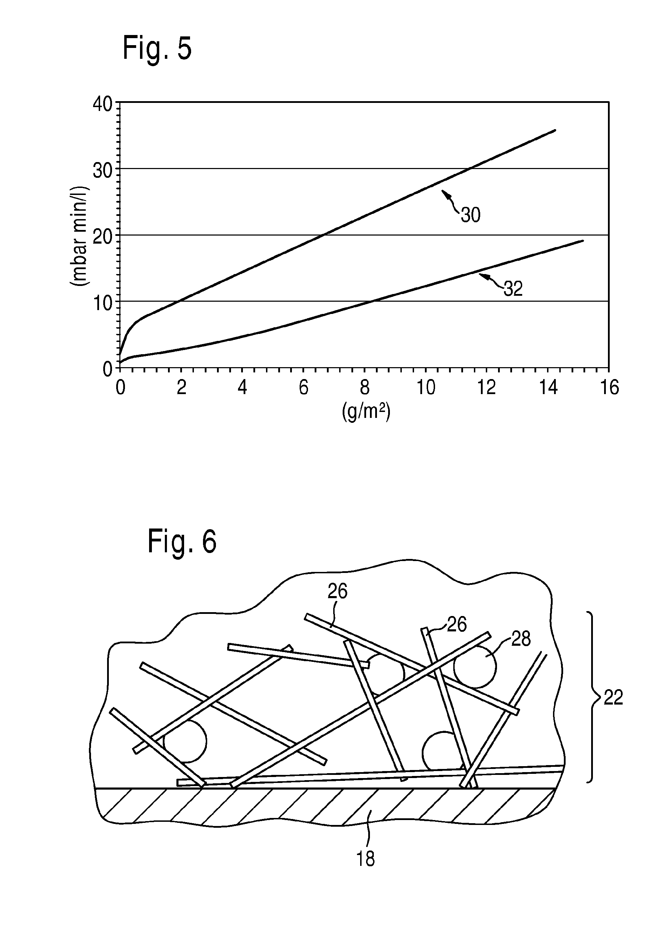

In Figur 5 ist eine Auftragung des Druckverlustes von in einen Abgasstrom integrierten Partikelfiltern über deren Beladung mit Partikeln abgebildet. Dabei zeigt die Auftragung 30 den Druckverlust eines Partikelfilters gem. Stand der Technik und die Auftragung 32 den Druckverlust eines Partikelfilters, dessen poröse Oberfläche mit einer Oberflächenbeschichtung 22 aus keramischen Fasern versehen wurde. Es ist deutlich zu erkennen, dass ein mit einer Oberflächenbeschichtung 22 versehener Partikelfilter bei gleicher Beladung einen deutlich geringerem Druckverlust zeigt. Dies bedeutet, dass ein mit keramischen Fasern beschichteter Partikelfilter eine höhere Beladung mit Partikeln verkraftet, bevor eine Regenerierung initiiert werden muss.

Dieser Effekt der Tiefenfiltration lässt sich noch verstärken, wenn, wie in Figur 6 abgebildet, die Oberflächenbeschichtung 22 neben den keramischen Fasern 26 zusätzlich sphärische Partikel 28 enthält. Diese dienen als Abstandhalter für die keramischen Fasern 26 und ermöglichen die gezielte Einstellung der Porosität bzw. der Durchlässigkeit der Schicht 22. Gleichzeitig dient der Zusatz sphärischer Partikel 28 der mechanischen Stabilisierung der Oberflächenbeschichtung 22. Die sphärischen Partikel 28 werden vorzugsweise aus dem gleichen Material ausgeführt wie die keramischen Fasern 26.Alternativ ist es möglich, die sphärischen Partikel aus Aluminiumoxid, Zirkondioxid, Titandioxid oder aus Mischoxiden von Übergangsmetallen auszuführen. Die sphärischen Partikel weisen vorzugsweise einen Durchmesser von 5 bis 50 µm auf.

Alternativ zur Verwendung sphärischer Partikel ist es auch möglich, der Oberflächenbeschichtung 22 zusätzlich zweite keramischer Fasern mit einem relativ geringen Aspektverhältnis von 1:1 bis 1:5 5 zuzusetzen. Dabei wird unter dem Aspektverhältnis das Verhältnis von Durchmesser zu Länge der Faser verstanden.

Weiterhin ist es möglich, den sphärischen Partikeln bzw. den zweiten keramischen Fasern katalytisch aktive Substanzen zuzusetzen. Dabei kann es sich beispielsweise um Oxidationskatalysatoren handeln. Hierzu eignen sich vorzugsweise Elemente der Platingruppe wie Platin, Palladium oder Rhodium. Eine weitere Möglichkeit besteht in der Zugabe katalytisch wirksamer Elemente, die zu einer Senkung der Rußabbrandtemperatur innerhalb der Oberflächenbeschichtung 22 führen, wie beispielsweise Vanadium, Cer, Eisen, Mangan, Molybdän, Cobalt, Silber, Lanthan, Kupfer, Kalium oder Cäsium. Die Zugabe dieser katalytisch aktiven Substanzen erleichtert die Regenerierung des Partikelfilters.

Eine indirekte Möglichkeit, katalytisch die Regenerationsfähigkeit des Filters zu verbessern, besteht darin, als katalytisch aktive Substanzen Speichermaterialien für gasförmige Oxidationsmittel zu verwenden, wobei die gespeicherten Oxidationsmittel zu einer Zersetzung organischer Anteile des abgelagerten Rußes führen. So können als katalytisch aktive Substanzen beispielsweise Speichermaterialien für Sauerstoff wie beispielsweise Ceroxid eingesetzt werden.
Darüber hinaus können durch eine Imprägnierung der Oberflächenbeschichtung 22 mit Speichermaterialien für Stickoxide, wie Bariumoxid oder Bariumcarbonat, Stickoxide gebunden und somit eine Reduzierung der Stickoxide im Abgasstrom erreicht werden.

Zusätzlich können auch die Fasern 26 mit einer katalytisch aktiven Substanz der oben genannten Art versehen werden. Dabei können die Fasern 26 und die sphärischen Partikel 28 die gleichen oder unterschiedliche katalytisch aktive Substanzen enthalten. Die Aufbringung der katalytisch aktiven Substanzen auf die Fasern 26 bzw. sphärischen Partikel 28 erfolgt vorzugsweise bevor diese zur Erzeugung der Schicht 22 in eine Suspension eingebracht werden. Dies ermöglicht die Aufbringung unterschiedlicher katalytisch aktiver Materialien auf die Fasern 26 bzw. die sphärischer Partikel 28. Die Aufbringung kann bspw. durch Imprägnierung erfolgen. Eine weitere Möglichkeit besteht darin, die Partikel selbst aus einem katalytisch aktiven Material auszuführen. Dazu können diese aus einem Übergangsmetalloxid oder aus Oxiden der seltenen Erden bestehen. In diesem Fall kann auf eine Imprägnierung mit katalytisch aktiven Substanzen verzichtet werden.

## Patentansprüche

1. Vorrichtung zur Reinigung von Gasgemischen, die Partikel enthalten, insbesondere von rußhaltigen Abgasen von Verbrennungsmotoren, wobei die Vorrichtung als Filter ausgeführt ist, der eine dem zu reinigenden Gasgemisch ausgesetzte, poröse Oberfläche aus einem Filterbasismaterial aufweist, **dadurch gekennzeichnet, dass** auf die dem zu reinigenden Gasgemisch ausgesetzte Oberfläche (18) eine Schicht (22) keramischer Fasern aufgebracht ist.

2. Vorrichtung nach Anspruch 1, **dadurch gekennzeichnet, dass** die keramischen Fasern durch einen Binder mit dem Filterbasismaterial verklebt sind.

3. Vorrichtung nach Anspruch 1 oder 2, **dadurch gekennzeichnet, dass** die keramischen Fasern Aluminiumoxid, ein Alumosilikat und/oder Zirkondioxid enthalten.

4. Vorrichtung nach einem der Ansprüche 1 bis 3, **dadurch gekennzeichnet, dass** die keramischen Fasern eine mittlere Länge von 150 bis 400 µm und/oder einen mittleren Durchmesser von 3 bis 10 µm aufweisen.

5. Vorrichtung nach einem der vorhergehenden Ansprüche, **dadurch gekennzeichnet, dass** die Schicht (22) keramischer Fasern zusätzlich sphärische Partikel enthält.

6. Vorrichtung nach einem der vorhergehenden Ansprüche, **dadurch gekennzeichnet, dass** die Schicht (22) keramischer Fasern zusätzlich zweite keramische Fasern mit einem Aspektverhältnis von 1:5 bis 1:1 enthält.

7. Vorrichtung nach Anspruch 5 oder 6, **dadurch gekennzeichnet, dass** die sphärischen Partikel, die keramischen Fasern und/oder die zweiten keramischen Fasern eine katalytisch aktive Substanz enthalten.

8. Vorrichtung nach einem der Ansprüche 5 bis 7, **dadurch gekennzeichnet, dass** die katalytisch aktive Substanz ein Oxidationskatalysator ist.

9. Vorrichtung nach einem der Ansprüche 5 bis 7, **dadurch gekennzeichnet, dass** die katalytisch aktive Substanz ein die Rußabbrandtemperatur senkender Katalysator ist.

10. Vorrichtung nach einem der Ansprüche 5 bis 7, **dadurch gekennzeichnet, dass** die katalytisch aktive Substanz ein Stickoxide und/oder Sauerstoff speicherndes Material ist.

11. Vorrichtung nach einem der vorhergehenden Ansprüche, **dadurch gekennzeichnet, dass** das Filterbasismaterial ein Sintermetall ist.

12. Vorrichtung nach einem der vorhergehenden Ansprüche, **dadurch gekennzeichnet, dass** der Binder ein anorganisches Material auf der Basis eines Aluminiumoxids, Siliciumoxids oder Alumosilikates ist.

13. Verfahren zur Herstellung einer Vorrichtung zur Reinigung von Gasgemischen, die Partikel enthalten, insbesondere einer Vorrichtung nach einem der Ansprüche 1 bis 12, wobei die Vorrichtung als Filter (10) ausgeführt ist, der eine dem zu reinigenden Gasgemisch ausgesetzte poröse Oberfläche aufweist, **dadurch gekennzeichnet, dass** auf die dem zu reinigenden Abgas ausgesetzte Oberfläche (18) eine Schicht (22) aus keramischen Fasern aufgebracht wird.

14. Verfahren nach Anspruch 13, **dadurch gekennzeichnet, dass** auf die dem zu reinigenden Gasgemisch ausgesetzte Oberfläche (18) zunächst eine Suspension der keramischen Fasern aufgebracht wird, dann überschüssige Suspension durch die poröse, dem zu reinigenden Gasgemisch ausgesetzte Oberfläche (18) abgezogen wird und die mit der Suspension beschichtete poröse Oberfläche (18) abschließend einer Wärmebehandlung unterzogen wird.

15. Verfahren nach Anspruch 14, **dadurch gekennzeichnet, dass** der Suspension zusätzlich sphärische Partikel oder keramische Fasern mit einem Aspektverhältnis von 1:1 bis 1:5 zugesetzt werden.

16. Verfahren nach Anspruch 14 oder 15, **dadurch gekennzeichnet, dass** die keramischen Fasern, die keramischen Fasern mit einem Aspektverhältnis von 1:1 bis 1:5 und/oder die sphärischen Partikel mit einer katalytisch aktiven Substanz versehen werden bevor diese der Suspension zugesetzt werden.

17. Verfahren nach Anspruch 16, **dadurch gekennzeichnet, dass** die keramischen Fasern mit einer ersten katalytisch aktiven Substanz versehen werden und dass die sphärischen Partikel und/oder die keramischen Fasern mit einem Aspektverhältnis von 1:1 bis 1:5 mit einer zweiten katalytisch aktiven Substanz versehen werden, wobei die erste und die zweite katalytisch aktive Substanz verschieden sind.

18. Verfahren nach einem der Ansprüche 13 bis 17, **dadurch gekennzeichnet, dass** das Sol aus einer alkoholischen Lösung eines hydrolisierbaren Metallalkoholats erzeugt wird.

19. Verwendung einer Vorrichtung nach einem der Ansprüche 1 bis 12 als Dieselpartikelfilter.
